(19) Europäisches Patentamt
European Patent Office
Office européen des brevets

(11) **EP 4 641 701 A1**

(12) **EUROPEAN PATENT APPLICATION**
published in accordance with Art. 153(4) EPC

(43) Date of publication:
29.10.2025 Bulletin 2025/44

(21) Application number: 23924250.6

(22) Date of filing: 22.12.2023

(51) International Patent Classification (IPC):
*H01M 4/62* (2006.01)   *H01G 11/24* (2013.01)
*H01G 11/32* (2013.01)   *H01M 4/13* (2010.01)

(52) Cooperative Patent Classification (CPC):
H01G 11/24; H01G 11/32; H01M 4/13; H01M 4/62;
Y02E 60/10

(86) International application number:
PCT/JP2023/046074

(87) International publication number:
WO 2024/176606 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.02.2023 JP 2023024285

(71) Applicant: GS Yuasa International Ltd.
Kisshoin, Minami-ku,
Kyoto-shi, Kyoto 601-8520 (JP)

(72) Inventors:
• YAMATANI, Norio
Kyoto-shi, Kyoto 601-8520 (JP)
• OTANI, Shinya
Kyoto-shi, Kyoto 601-8520 (JP)

(74) Representative: Isarpatent
Patent- und Rechtsanwälte
Barth Hassa Peckmann & Partner mbB
Friedrichstraße 31
80801 München (DE)

(54) **POSITIVE ELECTRODE MIXTURE FOR POWER STORAGE ELEMENT, POSITIVE ELECTRODE FOR POWER STORAGE ELEMENT, POWER STORAGE ELEMENT, AND POWER STORAGE DEVICE**

(57) A positive composite for an energy storage device according to an aspect of the present invention includes a positive active material and a conductive auxiliary agent, in which the conductive auxiliary agent includes a carbon nanotube, and, in a Log differential pore volume distribution, a ratio B/A of a maximum value B [$cm^3$/g] of a differential pore volume within a pore size range of 100 nm or more and 3000 nm or less to a maximum value A [$cm^3$/g] of a differential pore volume within a pore size range of 10 nm or more and 100 nm or less is 4.50 or more.

Fig. 1

**Description**

TECHNICAL FIELD

The present invention relates to a positive composite for an energy storage device, a positive electrode for an energy storage device, an energy storage device, and an energy storage apparatus.

BACKGROUND ART

A nonaqueous electrolyte secondary battery typified by a lithium ion secondary battery is often used for electronic devices such as personal computers and communication terminals, motor vehicles, and the like, since the battery is high in energy density. The nonaqueous electrolyte secondary battery generally includes a pair of electrodes electrically separated from each other by a separator, and a nonaqueous electrolyte interposed between the electrodes, and is configured to allow charge transport ions to be transferred between the two electrodes for charge-discharge. Capacitors such as lithium ion capacitors and electric double-layer capacitors, energy storage devices using electrolytes other than nonaqueous electrolytes, and the like are also widely used as energy storage devices other than nonaqueous electrolyte secondary batteries.

It is preferable that the energy storage devices have excellent power performance. In order to increase the power of an energy storage device, a conductive material (also referred to as a conductive auxiliary agent or the like) may be added to a positive composite (see Patent Document 1).

PRIOR ART DOCUMENT

PATENT DOCUMENT

Patent Document 1: JP-A-2012-209161

SUMMARY OF THE INVENTION

PROBLEMS TO BE SOLVED BY THE INVENTION

In order to increase the power of an energy storage device, it is preferable that electrolytes of the energy storage device sufficiently permeate into a void of a positive composite. Meanwhile, when a void having a large pore diameter is provided between positive active materials to allow the electrolytes to permeate into the void of the positive composite, a conduction path may not be properly formed by a conductive auxiliary agent, and the resistance of the energy storage device may rather increase.

The present invention has been made in view of the above circumstances, and an object of the present invention is to provide a positive composite for an energy storage device and a positive electrode for an energy storage device capable of reducing resistance of an energy storage device, an energy storage device having low resistance, and an energy storage apparatus.

MEANS FOR SOLVING THE PROBLEMS

A positive composite for an energy storage device according to an aspect of the present invention includes a positive active material and a conductive auxiliary agent, in which the conductive auxiliary agent includes a carbon nanotube, and, in a Log differential pore volume distribution, a ratio B/A of a maximum value B [cm$^3$/g] of a differential pore volume within a pore size range of 100 nm or more and 3000 nm or less to a maximum value A [cm$^3$/g] of a differential pore volume within a pore size range of 10 nm or more and 100 nm or less is 4.50 or more.

A positive electrode for an energy storage device according to another aspect of the present invention includes the positive composite for an energy storage device.

An energy storage device according to still another aspect of the present invention includes the positive electrode for an energy storage device.

An energy storage apparatus according to still another aspect of the present invention includes two or more energy storage devices, including one or more of the energy storage devices.

ADVANTAGES OF THE INVENTION

A positive composite for an energy storage device according to an aspect of the present invention and a positive electrode for an energy storage device according to another aspect of the present invention can reduce the resistance of an energy storage device.

An energy storage device and an energy storage apparatus according to still another aspect of the present invention have low resistance.

BRIEF DESCRIPTION OF THE DRAWINGS

Fig. 1 is a perspective oblique view illustrating an embodiment of an energy storage device including the positive electrode for an energy storage device.

Fig. 2 is a schematic view illustrating an embodiment of an energy storage apparatus configured by assembling a plurality of the energy storage devices including the positive electrode for an energy storage device.

MODE FOR CARRYING OUT THE INVENTION

First, outlines of a positive composite for an energy storage device, a positive electrode for an energy storage device, an energy storage device, and an energy storage apparatus disclosed by the present specification will be described.

(1) A positive composite for an energy storage device according to an aspect of the present invention includes a positive active material and a conductive auxiliary agent, in which the conductive auxiliary agent includes a carbon nanotube, and, in a Log differential pore volume distribution, a ratio B/A of a maximum value B [$cm^3$/g] of a differential pore volume within a pore size range of 100 nm or more and 3000 nm or less to a maximum value A [$cm^3$/g] of a differential pore volume within a pore size range of 10 nm or more and 100 nm or less is 4.50 or more.

The positive composite for an energy storage device according to (1) can reduce resistance of an energy storage device. Although the reason for this is not clear, the following reasons are presumed. In the positive composite, pore volumes within a pore size range of 100 nm or more and 3000 nm or less, representing pores of the positive active material and voids between positive active material particles, are larger than pore volumes within a pore size range of 10 nm or more and 100 nm or less, representing pores of the conductive auxiliary agent. In such a conventional positive composite for an energy storage device, while the electrolytes of the energy storage device easily permeate between the positive active material particles, a conduction path between the positive active material particles may not be sufficiently formed by the conductive auxiliary agent, and the resistance of the energy storage device may increase. On the other hand, in the positive composite for an energy storage device according to (1), a conduction path between the positive active material particles is easily formed by the conductive auxiliary agent even when the voids between the positive active material particles are large, since the conductive auxiliary agent contains a carbon nanotube. In addition, since the ratio between the pore volume in the conductive auxiliary agent and the pore volume in the positive active material and between the positive active material particles is appropriately controlled, the conductive auxiliary agent is adequately dispersed in the positive composite for an energy storage device and tends to be disposed between the positive active material particles. Therefore, the positive composite for an energy storage device according to (1) can reduce resistance of an energy storage device.

(2) In the positive composite for an energy storage device according to (1), a content of the conductive auxiliary agent may be 0.1% by mass or more and 3.0% by mass or less.

The positive composite for an energy storage device according to (2) can increase the capacity of the energy storage device while reducing the resistance of the energy storage device. The reason for this is presumed as follows. In general, it is possible to increase the capacity of the energy storage device by reducing the content of the conductive auxiliary agent in the positive composite for an energy storage device and relatively increasing the content of the positive active material. However, when the content of the conductive auxiliary agent in the positive composite for an energy storage device is reduced, the conduction path between the positive active material particles is not sufficiently formed by the conductive auxiliary agent, and the resistance of the energy storage device tends to increase. In this respect, since the positive composite for an energy storage device according to (2) is configured so that the conduction path is properly formed by the conductive auxiliary agent as described above, the resistance is easily reduced even when the content of the conductive auxiliary agent is low in the positive composite for an energy storage device. Therefore, when the content of the conductive auxiliary agent in the positive composite for an energy storage device according to (2) falls within the above range, it is possible to increase the capacity of the energy storage device while reducing the resistance of the energy storage device.

(3) A positive electrode for an energy storage device according to another aspect of the present invention includes the positive composite for an energy storage device according to (1) or (2).

Since the positive electrode for an energy storage device according to (3) includes the positive composite for an energy storage device according to (1) or (2), the resistance of the energy storage device can be reduced.

(4) An energy storage device according to still another aspect of the present invention includes the positive composite for an energy storage device according to (1) or (2) or the positive electrode for an energy storage device according to (3).

Since the energy storage device according to (4) includes the positive composite for an energy storage device according to (1) or (2) or the positive electrode for an energy storage device according to (3), the resistance is low.

In the present invention, the "Log differential pore volume" of the positive composite for an energy storage device is measured by the following procedure based on a mercury intrusion method.

The pore volume distribution of the positive composite for an energy storage device is measured by the mercury intrusion method using AutoPore 9400 (Micromeritics Instrument Corporation). The contact angle of mercury is set to 130°, and the surface tension is set to 484 dynes/cm. The pore size range to be measured is 10 nm to 12,000 nm. A cumulative pore volume curve is obtained by plotting the pore size on the horizontal axis and the pore volume on the vertical axis. Next, a value obtained by dividing the differential volume dV between the measurement points by the logarithmic differential value d(logD) of the pore size is determined, and this value is plotted against the average pore size of each section to obtain a Log differential pore volume curve. "A maximum value of a differential pore volume within a pore size range of 10 nm or more and 100 nm or less" is the maximum value of the Log differential pore volume within the pore size range of 10 nm or more and 100 nm or less in the Log differential pore volume curve, and "a maximum value of a differential pore volume within a pore size range of 100 nm or more and 3000 nm or less" is the maximum value of the Log differential pore volume within the pore size range of 100 nm or more and 3000 nm or less in the Log differential pore volume curve.

In the present invention, the "content (percentage of the content) of the conductive auxiliary agent" in the positive composite for an energy storage device is determined by the following procedure based on thermogravimetric-differential thermal analysis (TG-DTA).

First, a mass WO [mg] of about 10 mg of a sample of the positive composite for an energy storage device is measured to an accuracy of 0.01 mg at room temperature. Next, using a thermogravimetric-differential thermal analyzer, the sample is heated from 30°C to 900°C at a temperature rising rate of 2°C/min in the air atmosphere. At this time, a mass W1 [mg] of the sample at 460°C and a mass W2 [mg] of the sample at 700°C are each measured to an accuracy of 0.01 mg. A content $P_m$ [% by mass] of the conductive auxiliary agent in the positive composite for an energy storage device is calculated by the following equation.

$$P_m = \{(W1 - W2)/W0\} \times 100$$

In a case where the positive composite composes the positive electrode in the assembled energy storage device, the sample of the positive composite to be subjected to the measurement of the pore volume distribution and the thermogravimetric-differential thermal analysis is prepared by the following procedure. The energy storage device is discharged at a current of 0.1 C until the voltage reaches an end-of-discharge voltage under normal usage, so that the energy storage device is brought to a discharged state. Here, the term "under normal usage" refers to a case of using the energy storage device while employing discharge conditions recommended or specified for the energy storage device. The energy storage device in the discharged state is disassembled, a half battery is assembled with the positive electrode that has been taken out as a working electrode and metal Li as a counter electrode, and discharge is performed at a current of 0.1 C until a positive electrode potential reaches 3.0 V (vs. Li/Li+). The half battery is disassembled, and the positive electrode taken out is sufficiently washed with dimethyl carbonate, and then dried under reduced pressure at room temperature. A predetermined size (for example, 2 cm × 2 cm) of the positive composite is cut out from the dried positive electrode and used as the sample in the measurement of the pore volume distribution. In addition, 10 mg or more of the positive composite is collected from the dried positive electrode and used as the sample in the thermogravimetric-differential thermal analysis. The operations from the disassembly of the energy storage device to the cutting out or collection of the sample to be measured are performed in a dry air atmosphere with a dew point of -40°C or lower.

(5) An energy storage apparatus according to still another aspect of the present invention includes two or more energy storage devices, the energy storage devices include one or more energy storage devices according to (4).

Since the energy storage apparatus according to (5) includes one or more energy storage devices according to (4), the resistance is low.

Hereinafter, a positive composite for an energy storage device, a positive electrode for an energy storage device, an energy storage device, an energy storage apparatus, and a method for manufacturing an energy storage device according to an embodiment of the present invention, and other embodiments will be described in detail. It is to be noted that the name of each structural member (each component) used in each embodiment is in some cases different from the name of each structural member (each component) used in BACKGROUND ART.

[Positive composite for energy storage device]

In an embodiment of the present invention, a positive composite for an energy storage device (hereinafter, also referred to as "positive composite") contains a positive active material and a conductive auxiliary agent. The positive composite contains optional components such as a binder, a thickener, and a filler as necessary. The embodiment of the positive composite may be, for example, a positive active material layer stacked on a positive substrate of an energy storage device.

(Positive active material)

The positive active material can be appropriately selected from known positive active materials. As a positive active material for a lithium ion secondary battery, a material capable of occluding and releasing lithium ions is typically used. Examples of the positive active material include lithium transition metal composite oxides that have an $\alpha$-NaFeO$_2$-type crystal structure, lithium transition metal composite oxides that have a spinel-type crystal structure, polyanion compounds, chalcogenides, and sulfur. Examples of the lithium transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_y$Co$_{(1-x-y)}$]O$_2$ ($0 \leq x < 0.5$, $0 < y < 1$, $0 < 1-x-y$), Li[Li$_x$Co$_{(1-x)}$]O$_2$ ($0 \leq x < 0.5$), Li[Li$_x$Ni$_y$Mn$_{(1-x-y)}$]O$_2$ ($0 \leq x < 0.5$, $0 < y < 1$, $0 < 1-x-y$), Li[Li$_x$Ni$_y$Mn$_\beta$Co$_{(1-x-y-\beta)}$]O$_2$ ($0 \leq x < 0.5$, $0 < y$, $0 < B$, $0.5 < y + \beta < 1$, $0 < 1-x-y-\beta$), and Li[Li$_x$Ni$_y$Co$_\beta$Al$_{(1-x-y-\beta)}$]O$_2$ ($0 \leq x < 0.5$, $0 < y$, $0 < B$, $0.5 < y + \beta < 1$, $0 < 1-x-y-\beta$). Examples of the lithium transition metal composite oxides having a spinel-type crystal structure include Li$_x$Mn$_2$O$_4$ and Li$_x$Ni$_y$Mn$_{(2-y)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include titanium disulfide, molybdenum disulfide, and molybdenum dioxide. Atoms or polyanions in these materials may be partially substituted with atoms or anion species composed of other elements. These materials may have a surface thereof coated with another material. In the positive composite, one of these materials may be used singly or two or more thereof may be used in mixture.

As the positive active material, from the viewpoint of increasing the energy density, lithium transition metal composite oxides are preferable, lithium transition metal composite oxides having an $\alpha$-NaFeO$_2$-type crystal structure are more preferable, lithium transition metal composite oxides represented by the chemical formula Li[Li$_x$Ni$_y$Mn$_\beta$Co$_{(1-x-y-\beta)}$]O$_2$ ($0 \leq x < 0.5$, $0 < y$, $0 < \beta$, $0.5 < y + \beta < 1$, $0 < 1-x-y-\beta$) are even more preferable, lithium transition metal composite oxides satisfying $0.55 < y$ in the chemical formula are still more preferable, and lithium transition metal composite oxides satisfying $0.75 < y$ in the chemical formula are particularly preferable.

The positive active material is usually particles (powder). The lower limit of the average particle size of the positive active material is preferably 0.1 $\mu$m, more preferably 1 $\mu$m, and even more preferably 3 $\mu$m. Meanwhile, the upper limit of the average particle size of the positive active material is preferably 20 $\mu$m, more preferably 16 $\mu$m, and even more preferably 12 $\mu$m. When the average particle size of the positive active material is equal to or more than the above lower limit, the positive active material is easily produced or handled. When the average particle size of the positive active material is equal to or less than the above upper limit, the electron conductivity of the positive composite is improved. The average particle size of the positive active material may be equal to or more than any of the above lower limits and equal to or less than any of the above upper limits. In the case of using a composite of the positive active material and another material, the average particle size of the composite is regarded as the average particle size of the positive active material. The "average particle size" refers to a value (D50) corresponding to 50% in a volume-based cumulative distribution calculated, in accordance with JIS-Z-8819-2 (2001), based on a particle size distribution obtained by measuring a diluted solution, which is obtained by diluting particles with a solvent, by a laser diffraction/scattering method in accordance with JIS-Z-8825 (2013). It has been confirmed that the average particle size based on the above measurement substantially coincides with an average particle size measured by extracting one hundred positive active material particles, excluding extremely large positive active material particles and extremely small positive active material particles, from a scanning electron microscope (SEM) image of the positive composite acquired using a SEM. It is to be noted that the size of each positive active material particle in the measurement from the SEM image is regarded as a Feret diameter, and the volume of each positive active material particle is calculated as a sphere with the Feret diameter as a diameter.

A crusher, a classifier, or the like is used to obtain a positive active material with a predetermined particle size. Examples of a crushing method include a method of using a mortar, a ball mill, a sand mill, a vibratory ball mill, a planetary ball mill, a jet mill, a counter jet mill, a whirling airflow-type jet mill, a sieve, or the like. Wet crushing in which crushing is performed in the presence of water or an organic solvent such as hexane can also be used. As a classification method, a sieve, a wind force classifier, or the like is used in a dry or wet manner, as necessary.

The content of the positive active material in the positive composite is preferably 95.0% by mass or more and 99.0% by mass or less, more preferably 96.0% by mass or more and 99.0% by mass or less, and even more preferably 97.0% by mass or more and 99.0% by mass or less. When the content of the positive active material falls within the above range, it is possible to achieve both high energy density and manufacturability of the positive composite.

(Conductive auxiliary agent)

In an embodiment of the present invention, the conductive auxiliary agent contains carbon nanotubes (CNTs). Examples of the CNTs include single-walled carbon nanotubes (SWCNTs) formed from a single layer of graphene and multi-walled carbon nanotubes (MWCNTs) formed from two or more layers (for example, two to twenty layers, typically two to sixty layers) of graphene. The CNTs may include SWCNTs and MWCNTs in arbitrary proportions (the ratio by mass of SWCNTs : MWCNTs is, for example, from 100 : 0 to 0 : 100, preferably from 100 : 0 to 80 : 20). The structure of the CNTs is not particularly limited, and may be any of a chiral (helical) type, a zigzag type, and an armchair type. In addition, the CNTs may contain a catalyst metal (for example, Fe, Co, or a platinum group element (Ru, Rh, Pd, Os, Ir, or Pt)) or the like used for the synthesis of the CNTs.

The conductive auxiliary agent may contain a material other than the CNTs. Examples of such a material include carbonaceous materials other than the CNTs, metals, and conductive ceramics. Examples of the carbonaceous material other than CNTs include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene and fullerene. Examples of the form of these materials include a powdery form and a fibrous form. One of the materials other than the CNTs may be used singly, or two or more thereof may be used in mixture. Alternatively, a composite of the CNTs and these materials may be used. For example, a composite material of the CNTs and carbon black may be used. Among the materials other than the CNTs, carbon black is preferable from the viewpoints of electron conductivity and coatability, and in particular, acetylene black is preferable.

The lower limit of the content of the conductive auxiliary agent in the positive composite is preferably 0.1% by mass, more preferably 0.3% by mass, and even more preferably 0.5% by mass. Meanwhile, the upper limit of the content of the conductive auxiliary agent in the positive composite is preferably 3.0% by mass, more preferably 2.5% by mass, even more preferably less than 2.0% by mass, and still more preferably 1.5% by mass. When the content of the conductive auxiliary agent is equal to or more than the above lower limit, the electron conductivity of the positive composite is improved. When the content of the conductive auxiliary agent is equal to or less than the above upper limit, the energy density of the energy storage device can be improved. The content of the conductive auxiliary agent may be equal to or more than any of the above lower limits and equal to or less than any of the above upper limits.

The lower limit of the content of the carbon nanotubes (CNTs) in the positive composite is preferably 0.1% by mass, more preferably 0.2% by mass, and even more preferably 0.3% by mass. Meanwhile, the upper limit of the content of the CNTs in the positive composite is preferably 2.0% by mass, more preferably 1.5% by mass, and even more preferably 1.0% by mass. When the content of the CNTs is equal to or more than the above lower limit, the electron conductivity of the positive composite is improved. When the content of the CNTs is equal to or less than the above upper limit, it is easy to appropriately control the Log differential pore volume distribution of the positive composite described later. The content of the CNTs may be equal to or more than any of the above lower limits and equal to or less than any of the above upper limits.

Examples of the binder include thermoplastic resins such as fluororesins (for example, polytetrafluoroethylene (PTFE) and polyvinylidene fluoride (PVDF)), polyethylene, polypropylene, polyacrylic, and polyimide; elastomers such as an ethylene-propylene-diene monomer (EPDM) rubber, sulfonated EPDM, a styrene butadiene rubber (SBR), and a fluororubber; and polysaccharide polymers.

The content of the binder in the positive composite is preferably 1% by mass or more and 10% by mass or less and more preferably 1.5% by mass or more and 9% by mass or less. When the content of the binder falls within the above range, the positive active material can be stably held.

Examples of the thickener include polysaccharide polymers such as carboxymethylcellulose (CMC) and methylcellulose. When the thickener contains a functional group that reacts with lithium or the like, the functional group may be deactivated by methylation or the like in advance. In the case of using a thickener, the content of the thickener in the positive composite can be 0.1% by mass or more and 8% by mass or less, and is typically preferably 5% by mass or less and more preferably 2% by mass or less. The technique disclosed herein can be preferably carried out in an aspect in which the positive composite contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, hardly soluble ionic crystals such as calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite, and mica, and artificial products thereof. In the case of using a filler, the content of the filler in the positive composite can be 0.1% by mass or more and 8% by mass or less, and is typically preferably 5% by mass or less and more preferably 2% by mass or less. The technique disclosed herein can be preferably carried out in an aspect in which the positive composite contains no filler.

The positive composite may contain a typical nonmetal element such as B, N, P, F, Cl, Br, or I, a typical metal element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Nb, or W as a component other than the positive active material, the conductive auxiliary agent, the binder, the thickener, and the filler.

In the Log differential pore volume distribution of the positive composite, the lower limit of the ratio B/A of the maximum value B $[cm^3/g]$ of a differential pore volume within a pore size range of 100 nm or more and 3000 nm or less to the maximum value A $[cm^3/g]$ of a differential pore volume within a pore size range of 10 nm or more and 100 nm or less is 4.50, preferably 5.00, more preferably 5.50, even more preferably 6.00, and still more preferably 6.50. Meanwhile, the upper limit of the ratio B/A is preferably 14.00, more preferably 12.00, even more preferably 10.00, and still more preferably 8.00. When the ratio B/A is equal to or more than the above lower limit, the electrolytes of the energy storage device easily permeate between the positive active material particles, and the conductive auxiliary agent tends to be uniformly dispersed. When the ratio B/A is equal to or less than the above upper limit, the conductive auxiliary agent easily forms a conduction path between the positive active material particles. The ratio B/A may be equal to or more than any of the above lower limits and equal to or less than any of the above upper limits. The Log differential pore volume distribution of the positive composite can be controlled by preparing the content ratio of the conductive auxiliary agent, the kneading method or the rotation speed and the kneading time of the kneader when preparing the positive composite, the pressing pressure when forming the positive composite on the positive substrate, and the like.

The positive composite preferably has a peak (hereinafter, also referred to as "first peak") of the differential pore volume within a pore size range of 10 nm or more and 100 nm or less in the Log differential pore volume distribution. In addition, the position of the first peak in the Log differential pore volume distribution is preferably within a pore size range of 20 nm or more and 95 nm or less, more preferably within a pore size range of 30 nm or more and 90 nm or less, and even more preferably within a pore size range of 40 nm or more and 85 nm or less. When the position of the first peak is within the above pore size range, the resistance of the energy storage device can be further reduced.

In the Log differential pore volume distribution of the positive composite, the maximum value A $[cm^3/g]$ of the differential pore volume in the pore size range of 10 nm or more and 100 nm or less is preferably 0.010 $cm^3/g$ or more and 0.070 $cm^3/g$ or less, more preferably 0.015 $cm^3/g$ or more and 0.060 $cm^3/g$ or less, and even more preferably 0.020 $cm^3/g$ or more and 0.050 $cm^3/g$ or less. When the maximum value A falls within the above range, the resistance of the energy storage device can be further reduced. The maximum value A may be a differential pore volume at the first peak.

The positive composite preferably has a peak (hereinafter, also referred to as "second peak") of the differential pore volume within a pore size range of 100 nm or more and 3000 nm or less in the Log differential pore volume distribution. In addition, the position of the second peak in the Log differential pore volume distribution is preferably within a pore size range of 200 nm or more and 2500 nm or less, more preferably within a pore size range of 300 nm or more and 2000 nm or less, and even more preferably within a pore size range of 400 nm or more and 1500 nm or less. When the position of the second peak is within the above pore size range, the resistance of the energy storage device can be further reduced.

In the Log differential pore volume distribution of the positive composite, the maximum value B $[cm^3/g]$ of the differential pore volume in the pore size range of 100 nm or more and 3000 nm or less is preferably 0.050 $cm^3/g$ or more and 0.400 $cm^3/g$ or less, more preferably 0.080 $cm^3/g$ or more and 0.300 $cm^3/g$ or less, and even more preferably 0.100 $cm^3/g$ or more and 0.250 $cm^3/g$ or less. When the maximum value B falls within the above range, the resistance of the energy storage device can be further reduced. The maximum value B may be a differential pore volume at the second peak.

[Positive electrode for energy storage device]

A positive electrode for an energy storage device according to an embodiment of the present invention includes a positive substrate and a positive active material layer disposed on the positive substrate directly or with an intermediate layer interposed therebetween. The positive active material layer is composed of the positive composite for an energy storage device described above. Since the configuration of the positive composite for an energy storage device has been described above, the description thereof is omitted.

The positive substrate has conductivity. Whether or not the positive substrate has "conductivity" is determined by using a volume resistivity of $10^{-2}$ $\Omega \cdot cm$ as a threshold, the volume resistivity being measured in accordance with JIS-H-0505 (1975). As a material for the positive substrate, a metal such as aluminum, titanium, tantalum, and stainless steel, or an alloy thereof is used. Among these materials, aluminum or an aluminum alloy is preferable from the viewpoints of electric potential resistance, the magnitude of conductivity, and costs. Examples of the positive substrate include a foil, a deposited film, a mesh, and a porous material. From the viewpoint of costs, a foil is preferable. Therefore, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 $\mu$m or more and 50 $\mu$m or less, more preferably 5

μm or more and 40 μm or less, even more preferably 8 μm or more and 30 μm or less, and particularly preferably 10 μm or more and 25 μm or less. When the average thickness of the positive substrate falls within the above range, it is possible to increase the strength of the positive substrate as well as increase the energy density per volume of the energy storage device.

The intermediate layer is a layer disposed between the positive substrate and the positive active material layer. The intermediate layer contains a conductive auxiliary agent such as carbon particles, thereby reducing contact resistance between the positive substrate and the positive active material layer. The composition of the intermediate layer is not particularly limited, and the intermediate layer contains, for example, a binder and a conductive auxiliary agent. This conductive auxiliary agent may be the same as the conductive auxiliary agent in the positive composite described above.

[Energy storage device]

An energy storage device according to an embodiment of the present invention includes an electrode assembly including the positive electrode for an energy storage device (hereinafter, also referred to as "positive electrode"), a negative electrode, and a separator, an electrolyte, and a case that houses the electrode assembly and the electrolyte. The electrode assembly is typically a stacked type in which a plurality of positive electrodes and a plurality of negative electrodes are stacked with the separator interposed therebetween, or a wound type in which the positive electrode and the negative electrode are wound in a state of being stacked with the separator interposed therebetween. The electrolyte is present in a state where the positive electrode, the negative electrode, and the separator are impregnated with the electrolyte. A nonaqueous electrolyte secondary battery (hereinafter, also simply referred to as "secondary battery") is described as an example of the energy storage device. Since the configuration of the positive electrode for an energy storage device has been described above, the description thereof is omitted.

<Negative electrode>

The negative electrode includes a negative substrate and a negative active material layer disposed on the negative substrate directly or with an intermediate layer interposed therebetween. The configuration of the intermediate layer is not particularly limited, and for example, can be selected from the configurations exemplified for the positive electrode.

The negative substrate has conductivity. As a material for the negative substrate, a metal such as copper, nickel, stainless steel, nickel-plated steel, and aluminum, or an alloy thereof, a carbonaceous material, or the like is used. Among these materials, copper or a copper alloy is preferable. Examples of the negative substrate include a foil, a deposited film, a mesh, and a porous material. A foil is preferable from the viewpoint of costs. Therefore, the negative substrate is preferably a copper foil or a copper alloy foil. Examples of the copper foil include a rolled copper foil and an electrolytic copper foil.

The average thickness of the negative substrate is preferably 2 μm or more and 35 μm or less, more preferably 3 μm or more and 30 μm or less, even more preferably 4 μm or more and 25 μm or less, and particularly preferably 5 μm or more and 20 μm or less. When the average thickness of the negative substrate falls within the above range, it is possible to increase the strength of the negative substrate as well as increase the energy density per volume of the energy storage device.

The negative active material layer contains a negative active material. The negative active material layer contains an optional component such as a conductive auxiliary agent, a binder, a thickener, and a filler as necessary. The optional components such as a conductive auxiliary agent, a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Ta, Hf, Nb, or W as a component other than the negative active material, the conductive auxiliary agent, the binder, the thickener, or the filler.

The negative active material can be appropriately selected from known negative active materials. As the negative active material for a lithium ion secondary battery, a material capable of occluding and releasing lithium ions is typically used. Examples of the negative active material include metal Li; metals or metalloids such as Si and Sn; metal oxides or metalloid oxides such as a Si oxide, a Ti oxide, and a Sn oxide; titanium-containing oxides such as $Li_4Ti_5O_{12}$, $LiTiO_2$, and $TiNb_2O_7$; polyphosphoric acid compounds; silicon carbide; and carbon materials such as graphite and non-graphitic carbon (easily graphitizable carbon or non-graphitizable carbon). Among these materials, graphite and non-graphitic carbon are preferable. In the negative active material layer, one of these materials may be used singly, or two or more thereof may be used in mixture.

The "graphite" refers to a carbon material in which the average lattice spacing ($d_{002}$) of the (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material having stable physical properties can be obtained.

The "non-graphitic carbon" refers to a carbon material in which the average lattice spacing ($d_{002}$) of the (002) plane determined by an X-ray diffraction method before charge-discharge or in a discharged state is 0.34 nm or more and 0.42 nm or less. Examples of the non-graphitic carbon include non-graphitizable carbon and easily graphitizable carbon. Examples of the non-graphitic carbon include a resin-derived material, a petroleum pitch or a petroleum pitch-derived material, a petroleum coke or a petroleum coke-derived material, a plant-derived material, and an alcohol-derived material.

Here, the "discharged state" of the carbon material means a state where the carbon material is discharged so that lithium ions that can be occluded and released upon charge-discharge are sufficiently released from the carbon material serving as the negative active material. For example, the "discharged state" refers to a state where the open circuit voltage is 0.7 V or higher in a half battery that has, as a working electrode, a negative electrode containing the carbon material as a negative active material, and has metal Li as a counter electrode.

The "non-graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The negative active material is usually particles (powder). The average particle size of the negative active material can be, for example, 1 nm or more and 100 $\mu$m or less. When the negative active material is a carbon material, a titanium-containing oxide, or a polyphosphoric acid compound, the average particle size thereof may be 1 $\mu$m or more and 100 $\mu$m or less. When the negative active material is Si, Sn, a Si oxide, a Sn oxide, or the like, the average particle size thereof may be 1 nm or more and 1 $\mu$m or less. When the average particle size of the negative active material is equal to or more than the above lower limit, the negative active material is easily manufactured or handled. When the average particle size of the negative active material is equal to or less than the above upper limit, the electron conductivity of the negative active material layer is improved. A crusher, a classifier, or the like is used to obtain a powder with a predetermined particle size. A crushing method and a classification method can be selected from, for example, the methods exemplified for the positive electrode. When the negative active material is a metal such as metal Li, the negative active material layer may be in the form of a foil.

The content of the negative active material in the negative active material layer is preferably 60% by mass or more and 99% by mass or less and more preferably 90% by mass or more and 98% by mass or less. When the content of the negative active material falls within the above range, it is possible to achieve both high energy density and manufacturability of the negative active material layer. When the negative active material is metal Li, the content of the negative active material in the negative active material layer may be 99% by mass or more and may be 100% by mass.

<Separator>

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of the liquid retaining property of the nonaqueous electrolyte. As the material for the substrate layer of the separator, for example, a polyolefin such as polyethylene or polypropylene is preferable from the viewpoint of the shutdown function, and polyimide, aramid, or the like is preferable from the viewpoint of resistance to oxidative decomposition. As the substrate layer of the separator, a composite material of these resins may be used.

The heat resistant particles included in the heat resistant layer preferably undergo mass reduction by 5% or less when the temperature is increased from room temperature to 500°C in the air atmosphere of 1 atm, and more preferably undergo mass reduction by 5% or less when the temperature is increased from room temperature to 800°C. Examples of materials of which the mass is reduced by a predetermined percentage or less include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, a simple substance or a composite of these substances may be used singly, or two or more thereof may be used in mixture. Among these inorganic compounds, silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value and means a value measured with a mercury porosimeter.

As the separator, a polymer gel composed of a polymer and an electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with a porous resin film, a nonwoven fabric, or the like described above.

<Nonaqueous electrolyte>

As the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. By using the cyclic carbonate, dissociation of the electrolyte salt can be promoted to improve the ionic conductivity of the nonaqueous electrolyte solution. By using the chain carbonate, viscosity of the nonaqueous electrolyte solution can be kept low. When the cyclic carbonate and the chain carbonate are used in combination, a volume ratio between the cyclic carbonate and the chain carbonate (cyclic carbonate : chain carbonate) is preferably, for example, in a range from 5 : 95 to 50 : 50.

The electrolyte salt can be appropriately selected from known electrolyte salts. Examples of the electrolyte salts include lithium salts, sodium salts, potassium salts, magnesium salts, and onium salts. Among these salts, the lithium salts are preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, an inorganic lithium salt is preferable, and $LiPF_6$ is more preferable.

The content of the electrolyte salt in the nonaqueous electrolyte solution is, at 20°C and 1 atm, preferably 0.1 $mol/dm^3$ or more and 2.5 $mol/dm^3$ or less, more preferably 0.3 $mol/dm^3$ or more and 2.0 $mol/dm^3$ or less, even more preferably 0.5 $mol/dm^3$ or more and 1.7 $mol/dm^3$ or less, and particularly preferably 0.7 $mol/dm^3$ or more and 1.5 $mol/dm^3$ or less. When the content of the electrolyte salt falls within the above range, the ionic conductivity of the nonaqueous electrolyte solution can be increased.

The nonaqueous electrolyte solution may contain an additive in addition to the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated products of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, even more preferably 0.2% by mass or more and 5% by mass or less, and particularly preferably 0.3% by mass or more and 3% by mass or less, with respect to the total mass of the nonaqueous electrolyte solution. When the content of the additive falls within the above range, it is possible to improve capacity retention performance or charge-discharge cycle performance after high-temperature storage, and to further improve safety.

As the nonaqueous electrolyte, a solid electrolyte may be used, or a nonaqueous electrolyte solution and a solid electrolyte may be used in combination.

The solid electrolyte can be selected from any materials that have ionic conductivity and is solid at normal temperature (for example, 15°C to 25°C), such as lithium, sodium, and calcium. Examples of the solid electrolyte include a sulfide solid electrolyte, an oxide solid electrolyte, a nitride solid electrolyte, and a polymer solid electrolyte.

In the case of a lithium ion secondary battery, examples of the sulfide solid electrolyte include $Li_2S-P_2S_5$, $LiI-Li_2S-P_2S_5$, and $Li_{10}Ge-P_2S_{12}$.

The shape of the energy storage device according to the present embodiment is not particularly limited, and examples thereof include cylindrical batteries, prismatic batteries, flat batteries, coin batteries and button batteries.

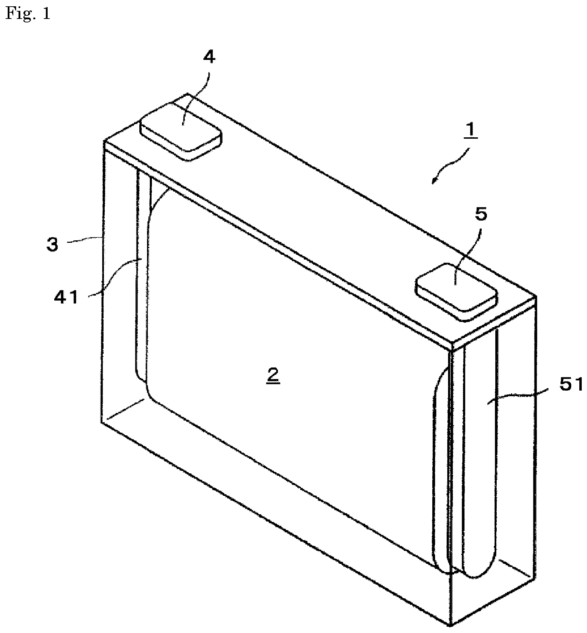

Fig. 1 illustrates an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

[Energy storage apparatus]

The energy storage device according to the present embodiment can be mounted, as an energy storage unit (battery module) configured by assembling a plurality of energy storage devices, on a power source for an automobile such as an electric vehicle (EV), a hybrid electric vehicle (HEV), and a plug-in hybrid electric vehicle (PHEV), a power source for an electronic device such as a personal computer and a communication terminal, or a power source for power storage, or the like. In this case, the technique of the present invention only has to be applied to at least one energy storage device included in the energy storage unit.

An energy storage apparatus according to an embodiment of the present invention includes two or more energy storage devices, including one or more energy storage devices according to an embodiment of the present invention (hereinafter, referred to as "second embodiment"). The technique according to an embodiment of the present invention only has to be applied to at least one energy storage device included in the energy storage apparatus according to the second embodiment, and the energy storage apparatus may include one energy storage device according to an embodiment of the present invention along with one or more energy storage devices not according to an embodiment of the present invention, or may include two or more energy storage devices according to an embodiment of the present invention.

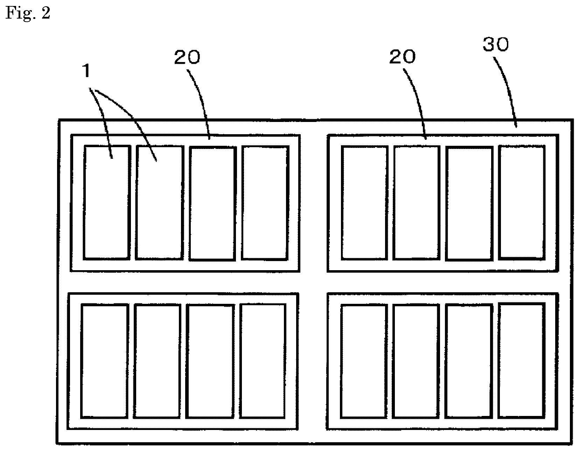

Fig. 2 illustrates an example of an energy storage apparatus 30 according to the second embodiment, obtained by further assembling energy storage units 20 that each have two or more electrically connected energy storage devices 1 assembled. The energy storage apparatus 30 may include a busbar (not illustrated) that electrically connects two or more energy storage devices 1, a busbar (not illustrated) that electrically connects two or more energy storage units 20, and the like. The energy storage unit 20 or the energy storage apparatus 30 may include a state monitor (not illustrated) that monitors the state of one or more energy storage devices.

[Method for manufacturing energy storage device]

A method for manufacturing the energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. Preparing the electrode assembly includes preparing a positive electrode and a negative electrode and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected through an inlet formed in the case, and then the inlet may be sealed.

[Other embodiments]

The positive composite for an energy storage device, the positive electrode for an energy storage device, and the energy storage device of the present invention are not limited to the embodiment described above, and various changes may be made without departing from the gist of the present invention. For example, to the configuration of an embodiment, the configuration of another embodiment can be added, or a part of the configuration of an embodiment can be replaced with the configuration of another embodiment or a well-known technique. Furthermore, a part of the configuration of an embodiment can be removed. In addition, a well-known technique can be added to the configuration of an embodiment.

While a case where the positive composite for an energy storage device and the positive electrode for an energy storage device are used in a chargeable and dischargeable nonaqueous electrolyte secondary battery (for example, a lithium ion secondary battery) has been described in the above embodiment, the kind, shape, dimensions, capacity, and the like of the energy storage device in which the positive composite for an energy storage device and the positive electrode for an energy storage device are used are arbitrary. The present invention can also be applied to various secondary batteries, capacitors such as electric double-layer capacitors and lithium ion capacitors, and energy storage devices in which an electrolyte other than nonaqueous electrolytes is used.

EXAMPLES

Hereinafter, the present invention will be described more specifically with reference to Examples. The present invention is not limited to the following Examples.

[Example 1]

(Preparation of positive electrode)

As a positive active material, a lithium transition metal composite oxide (NCM811) represented by Li-$Ni_{0.8}Mn_{0.1}Co_{0.1}O_2$ was used. The average particle size (D50) of the positive active material measured by the above-described method was 12 $\mu$m.

A mixture was prepared by mixing the positive active material, carbon nanotubes (CNTs) serving as a conductive auxiliary agent, and polyvinylidene fluoride (PVDF) serving as a binder at a mass ratio of 97.9 : 0.6 : 1.5 in terms of solid content, using N-methylpyrrolidone (NMP) as a dispersion medium. As the carbon nanotubes, multi-walled carbon nanotubes (MWCNTs) were used. The mixture was kneaded using a high speed mixer (FILMIX (registered trademark) manufactured by PRIMIX Corporation) to obtain a positive composite paste. The positive composite paste was applied to both sides of an aluminum foil that served as a positive substrate. Then, the paste was dried and roll-pressed to obtain a positive active material layer composed of a positive composite of Example 1. In addition, a positive electrode of Example 1 on which the positive active material layer was formed was obtained.

(Preparation of negative electrode)

Graphite (Gr) serving as a negative active material, a styrenebutadiene rubber (SBR) serving as a binder, carboxymethyl cellulose (CMC) serving as a thickener, and water serving as a dispersion medium were mixed together to prepare a negative composite paste. The mass ratio of Gr, SBR, and CMC was set to be 96 : 2 : 2 in terms of solid content. The negative composite paste was applied onto both sides of a copper foil that served as a negative substrate, dried, and roll-pressed to form a negative active material layer, thereby obtaining a negative electrode.

(Preparation of nonaqueous electrolyte)

$LiPF_6$ serving as an electrolyte salt was dissolved at a concentration of 1.2 mol/dm$^3$ in a solvent obtained by mixing ethylene carbonate (EC), diethyl carbonate (DEC), and ethyl methyl carbonate (EMC) at a volume ratio of 30 : 35 : 35 to obtain a nonaqueous electrolyte.

(Preparation of energy storage device)

The positive electrode and the negative electrode described above were stacked with a separator which was a polyolefin-made microporous film interposed therebetween to prepare an electrode assembly. The electrode assembly was housed in a case made of a metal-resin composite film, the nonaqueous electrolyte was injected into the case, and then the case was sealed by heat welding to obtain an energy storage device.

[Comparative Example 1]

A positive electrode in which a positive active material layer composed of a positive composite of Comparative Example 1 was formed and an energy storage device were obtained by the same procedure as in Example 1, except that the mass ratio of the positive active material, carbon black (CB) serving as the conductive auxiliary agent, and the binder in the mixture was set to 94.5 : 4.0 : 1.5 in terms of solid content, and the rotation speed and the kneading time of the high speed mixer were changed.

In the present Example and Comparative Example, the total contents of the positive active material and the conductive auxiliary agent in the positive composite and the positive active material layer were adjusted to 98.5% by mass, and the contents of the binder were both 1.5% by mass, thus being the same. In the present Example and Comparative Example, acetylene black (AB) was used as the carbon black.

[Example 2 and Comparative Examples 2 and 3]

Positive electrodes in which positive active material layers composed of positive composites of Example 2 and Comparative Examples 2 and 3 were formed and energy storage devices were obtained by the same procedure as in Example 1, except that the average particle sizes (D50) of the positive active materials and the kinds and contents of the conductive auxiliary agents were as shown in Table 1, and the rotation speed and the kneading time of the high speed mixer were changed.

[Comparative Examples 4 to 6]

As a positive active material, a lithium transition metal composite oxide (NCM622) represented by $LiNi_{0.6}Mn_{0.2}Co_{0.2}O_2$ was used. The average particle size (D50) of the positive active material measured by the above-described method was 12 $\mu$m. Positive electrodes in which positive active material layers composed of positive composites of Comparative Examples 4 to 6 were formed and energy storage devices were obtained by the same procedure as in Example 1, except that the kinds and contents of the conductive auxiliary agents were as shown in Table 2, and the rotation speed and the kneading time of the high speed mixer and the pressing pressure at the time of roll-pressing the positive composite were changed.

The Log differential pore volume distribution of the positive composite was obtained by the above-described method for each of the obtained energy storage devices. Tables 1 and 2 show the pore size within the pore size range of 10 nm or more and 100 nm or less in the Log differential pore volume distribution at which the differential pore volume is maximum (first peak position) [nm] and the value of the differential pore volume (first peak height, maximum value A) [cm$^3$/g], and the pore size within the pore size range of 100 nm or more and 3000 nm or less at which the differential pore volume is maximum (second peak position) [nm] and the value of the differential pore volume (second peak height, maximum value B) [cm$^3$/g]. The ratios of the maximum value B to the maximum value A (peak height ratio, B/A) are also shown in Tables 1 and 2.

[Evaluation]

(Initial charge-discharge)

Each energy storage device prepared using each positive electrode was subjected to initial charge-discharge under the following conditions.

In a thermostatic chamber at 25°C, the energy storage devices were subjected to constant current charge at a charge current of 1.0 C and an end-of-charge voltage of 4.20 V, and then to constant voltage charge at 4.20 V. With regard to the charge termination condition, the charge was terminated when the charge current reached 0.01 C. The charge was followed by a pause period of 10 minutes. Thereafter, constant current discharge was performed at a current of 0.2 C and an end-of-discharge voltage of 2.50 V. Two cycles of this charge-discharge cycle were performed. An initial discharge capacity per mass of the energy storage device [mAh/g] was measured based on the second discharge.

(Direct-current resistance test)

The direct-current resistance (DCR) of each energy storage device after the initial charge-discharge was evaluated by the following procedure.

In a thermostatic chamber at 25°C, constant current charge was performed at a charge current of 1 C with an electrical quantity corresponding to 10% of the initial discharge capacity so that the state of charge (SOC) of each energy storage device was 10%, and then each energy storage device was stored in the thermostatic chamber at 25°C for 4 hours.

Then, each energy storage device was discharged at a current of 0.1 C for 30 seconds, 0.2 C for 30 seconds, and 0.3 C for 30 seconds. From a current-voltage performance graph obtained by plotting the voltage 10 seconds after the start of each discharge on the vertical axis and the discharge current on the horizontal axis, a direct-current resistance [mΩ] corresponding to the slope was obtained as the DCR at 25°C. The direct-current resistance (DCR) of each energy storage device is shown in Tables 1 and 2. In Table 1, the direct-current resistance (DCR) values for Example 1 and Comparative Example 1 are relative values with respect to the DCR of the energy storage device obtained in Comparative Example 1, and the direct-current resistance (DCR) values for Example 2 and Comparative Example 3 are relative values with respect to the DCR of the energy storage device obtained in Comparative Example 3. As for Comparative Example 2, since the DCR was too large to be measured, the DCR is indicated by "-" in Table 1. The direct-current resistance (DCR) values in Table 2 are relative values with respect to the DCR of the energy storage device obtained in Comparative Example 4.

[Table 1]

| | | Comparative Example 1 | Example 1 | Comparative Example 2 | Comparative Example 3 | Example 2 |
|---|---|---|---|---|---|---|
| Positive active material | | NCM811 | NCM811 | NCM811 | NCM811 | NCM811 |
| D50[$\mu$m] | | 12 | 12 | 10 | 10 | 10 |
| Conductive auxiliary agent [% by mass] | CB | 4.0 | 0.0 | 0.6 | 4.0 | 1.0 |
| | CNT | 0.0 | 0.6 | 0.0 | 0.0 | 0.5 |
| First peak position [nm] | | 62 | 75 | 95 | 62 | 75 |
| First peak height [cm$^3$/g] | | 0.06101 | 0.02002 | 0.01074 | 0.07185 | 0.02667 |
| Second peak position [nm] | | 279 | 1019 | 826 | 546 | 1034 |
| Second peak height [cm$^3$/g] | | 0.06678 | 0.15420 | 0.15440 | 0.12570 | 0.17550 |
| Peak height ratio | | 1.09 | 7.70 | 14.38 | 1.75 | 6.58 |
| 25°C DCR | | 100 | 89 | - | 100 | 71 |

[Table 2]

| | | Comparative Example 4 | Comparative Example 5 | Comparative Example 6 |
|---|---|---|---|---|
| Positive active material | | NCM622 | NCM622 | NCM622 |
| D50[$\mu$m] | | 12 | 12 | 12 |
| Conductive auxiliary agent [% by mass] | CB | 4.0 | 3.0 | 3.0 |
| | CNT | 0.0 | 0.0 | 0.2 |
| First peak position [nm] | | 62 | 62 | 62 |
| First peak height [cm$^3$/g] | | 0.053 | 0.029 | 0.029 |
| Second peak position [nm] | | 1277 | 1029 | 1293 |
| Second peak height [cm$^3$/g] | | 0.079 | 0.091 | 0.129 |
| Peak height ratio | | 1.49 | 3.14 | 4.45 |
| 25°C DCR | | 100 | 101 | 109 |

As shown in Table 1, in the energy storage device of Example 1 in which the conductive auxiliary agent contained CNTs and the peak height ratio was 4.50 or more, the resistance was reduced as compared with the energy storage device of Comparative Example 1 in which the conductive auxiliary agent did not contain CNTs and the peak height ratio was less than 4.50. In addition, in the energy storage device of Example 2 in which the conductive auxiliary agent contained CNTs and the peak height ratio was 4.50 or more, the resistance was reduced as compared with the energy storage device of Comparative Example 3 in which the conductive auxiliary agent did not contain CNTs and the peak height ratio was less than 4.50. Moreover, in the energy storage device of Comparative Example 2 in which the conductive auxiliary agent did not contain CNTs and the peak height ratio was 4.50 or more, the resistance was very high.

As shown in Table 2, in the energy storage device of Comparative Example 6 in which the conductive auxiliary agent contained CNTs and the peak height ratio was less than 4.50, the resistance was higher than that of the energy storage devices of Comparative Examples 4 and 5 in which the conductive auxiliary agent did not contain CNTs and the peak height ratio was less than 4.50.

Based on the above results, it is considered that the resistance is reduced when the conductive auxiliary agent contains CNTs and the peak height ratio is 4.50 or more, but the resistance is difficult to be reduced by controlling only one of the composition of the conductive auxiliary agent and the peak height ratio.

In Examples 1 and 2, the content of the conductive auxiliary agent in the positive composite is 1.5 mass% or less. Therefore, it is thought that the capacity of the energy storage device can be increased by setting the content of the conductive auxiliary agent relatively low while reducing the resistance.

## INDUSTRIAL APPLICABILITY

The present invention can be applied to, for example, energy storage devices used as power sources for electronic devices such as personal computers and communication terminals, motor vehicles, and the like.

## DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A positive composite for an energy storage device comprising:

   a positive active material; and
   a conductive auxiliary agent,
   wherein the conductive auxiliary agent includes a carbon nanotube, and
   in a Log differential pore volume distribution, a ratio B/A of a maximum value B [cm$^3$/g] of a differential pore volume within a pore size range of 100 nm or more and 3000 nm or less to a maximum value A [cm$^3$/g] of a differential pore volume within a pore size range of 10 nm or more and 100 nm or less is 4.50 or more.

2. The positive composite for an energy storage device according to claim 1, wherein a content of the conductive auxiliary agent is 0.1% by mass or more and 3.0% by mass or less.

3. A positive electrode for an energy storage device comprising the positive composite for an energy storage device according to claim 1 or 2.

4. An energy storage device comprising the positive electrode for an energy storage device according to claim 3.

5. An energy storage apparatus comprising two or more energy storage devices, the energy storage devices include one or more energy storage devices according to claim 4.

Fig. 1

Fig. 2

## INTERNATIONAL SEARCH REPORT

| International application No. |
|---|
| **PCT/JP2023/046074** |

| A. | CLASSIFICATION OF SUBJECT MATTER |
|---|---|

*H01M 4/62*(2006.01)i; *H01G 11/24*(2013.01)i; *H01G 11/32*(2013.01)i; *H01M 4/13*(2010.01)i
FI:   H01M4/62 Z; H01G11/24; H01G11/32; H01M4/13

According to International Patent Classification (IPC) or to both national classification and IPC

| B. | FIELDS SEARCHED |
|---|---|

Minimum documentation searched (classification system followed by classification symbols)

   H01M4/62; H01G11/24; H01G11/32; H01M4/13

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2018-535520 A (LG CHEM, LTD.) 29 November 2018 (2018-11-29)<br>examples, fig. 3 | 1-5 |
| X | JP 2023-15591 A (NISSAN MOTOR CO., LTD.) 01 February 2023 (2023-02-01)<br>example 1, comparative example 3 | 1-5 |
| X | JP 2020-155223 A (ABRI CO., LTD.) 24 September 2020 (2020-09-24)<br>examples | 1-5 |
| X | JP 2018-523902 A (LG CHEM, LTD.) 23 August 2018 (2018-08-23)<br>paragraph [0012], examples | 1-5 |
| A | WO 2016/084346 A1 (SANYO ELECTRIC CO., LTD.) 02 June 2016 (2016-06-02)<br>entire text | 1-5 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/046074**

| Patent document cited in search report | | | Publication date (day/month/year) | Patent family member(s) | | | Publication date (day/month/year) |
|---|---|---|---|---|---|---|---|
| JP | 2018-535520 | A | 29 November 2018 | US 2018/0219212 examples, fig. 3 | A1 | | |
| | | | | WO 2017/099481 | A1 | | |
| | | | | EP 3319151 | A1 | | |
| | | | | KR 10-2017-0069153 | A | | |
| | | | | CN 107925056 | A | | |
| JP | 2023-15591 | A | 01 February 2023 | (Family: none) | | | |
| JP | 2020-155223 | A | 24 September 2020 | (Family: none) | | | |
| JP | 2018-523902 | A | 23 August 2018 | US 2018/0248195 paragraph [0012], examples | A1 | | |
| | | | | WO 2017/095151 | A1 | | |
| | | | | EP 3370279 | A1 | | |
| | | | | KR 10-2017-0063402 | A | | |
| | | | | CN 108028355 | A | | |
| WO | 2016/084346 | A1 | 02 June 2016 | US 2017/0324080 | A1 | | |
| | | | | CN 107004831 | A | | |

Form PCT/ISA/210 (patent family annex) (July 2022)

**EP 4 641 701 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012209161 A